# EUROPEAN PATENT SPECIFICATION

(11) **EP 4 418 963 B1**
(45) Date of publication and mention of the grant of the patent: **15.10.2025**
(21) Application number: 22822871.4
(22) Date of filing: 21.11.2022
(51) Int. Cl.: A47J 31/36, A47J 31/46, A47J 31/00

(54) **COFFEE MACHINE FOR PREPARING COFFEE WITH HIGHLY FLEXIBLE USE**
KAFFEEMASCHINE ZUR HERSTELLUNG VON KAFFEE MIT HOCHFLEXIBLER VERWENDUNG
MACHINE À CAFÉ POUR PRÉPARATION DE CAFÉ À USAGE TRÈS POLYVALENT

(30) Priority: 23.12.2021 IT 202100032600
(43) Date of publication of application: 28.08.2024
(73) Proprietor: De' Longhi Appliances S.r.l., 31100 Treviso (IT)
(72) Inventor: ROSSETTO, Giovanni, 31100 Treviso (IT); VAZZOLER, Alessio, 31100 Treviso (IT)
(74) Representative: Rapisardi, Mariacristina
(86) International application number: PCT/EP2022/082626
(87) International publication number: WO 2023/117246

(56) References cited:
- EP-A1- 2 524 634
- EP-A1- 2 524 635
- EP-A1- 2 524 637
- DE-A1- 102013 109 619

## Description

The present invention relates to a coffee machine for preparing coffee with highly flexible use. Different technical solutions are known for producing cold coffee based beverages.

In some cases, with machines intended for preparing espresso coffee, the coffee is initially extracted at high pressure at a temperature greater than 50°C, and subsequently the beverage is cooled in the fridge or by adding ice.

This type of extraction produces a beverage in the cup with an aromatic profile similar to hot extraction with the typical notes of espresso coffee which are not very well suited to a cold taste unless sugar is added for compensating the strong bitter flavours.

More recently, extractions have been proposed directly at room temperature and/or low temperatures (e.g. in the range from 0°C to 25°C) so as to accelerate the preparation of the beverage which is already cold directly in the cup.

These extractions can be carried out with an espresso coffee machine by deactivating or excluding the boiler that heats the brewing water by a relevant hydraulic by-pass line.

These cold extractions can significantly alter the sensory profile of the extract to the extent that they make it less pleasant because of the presence of bitter/metallic aromas in the mouth.

Finally, such cold extractions may make the quality of the extraction less optimal as they are affected by the effective temperature of the water used and the effective room temperature inside and outside the coffee machine which can vary and not therefore be completely under control. DE 10 2013 109619 A1 discloses a coffee machine according to the preamble of claim 1.

The technical task of the present invention is, therefore, to realise a coffee machine which obviates the above-described technical drawbacks of the prior art.

Within the context of this technical task an object of the invention is to realise a coffee machine configured to guarantee improved cold extraction of the coffee to produce an improved cold extract in terms of body, balance of the aromatic profile and pleasant taste, while respecting the expectations of freshness during tasting.

The technical task, as well as these and other objects, according to the present invention, are reached by realising a coffee machine comprising a water supply pump, a first water heating boiler, a brewing unit comprising a hot water dispensing head, a first hydraulic connection line for connecting said first boiler to said dispensing head, a second by-pass line of the first boiler, hydraulically connecting said pump to said dispensing head, distribution valve means switchable between a first connection configuration of said supply pump to said first line and a second connection configuration of said supply pump to said second line, characterised in that said first line is provided with a first non-return valve calibrated at a first opening pressure and said second line is provided with a second non-return valve calibrated at a second opening pressure lower than said first opening pressure.

Preferably, said brewing unit comprises a filter holder housing a filter engageable with said dispensing head for delimiting a brewing chamber.

Preferably, said supply pump is configured to dispense water at a dispensing pressure comprised between 4 bar and 25 bar, said first non-return valve is calibrated with a first opening pressure comprised between 3 bar and 8 bar and said second non-return valve is calibrated with a second opening pressure comprised between 0.05 bar and 3 bar.

Preferably, said first non-return valve is calibrated with a first opening pressure comprised between 4 bar and 6 bar and said second non-return valve is calibrated with a second opening pressure comprised between 0.1 bar and 2.5 bar.

The coffee machine comprising a water tank and/or a connection to a water supply, and according to a particularly advantageous aspect has along said second line or upstream of said distribution valve means a thermal stabiliser of the water coming from said water tank and/or from said connection to a water supply.

Preferably said thermal stabiliser is configured to stabilise the temperature of the water coming from said water tank and/or from said connection to a water supply in a range comprised between 25°C and 35°C.

According to a particularly advantageous aspect said filter holder houses an espresso coffee filter.

In particular, said espresso coffee filter is configured with holes calibrated to maintain a brewing pressure comprised between 6 bar and 15 bar inside said brewing chamber.

In an embodiment of the invention said distribution valve means comprises a three-way solenoid valve.

In an embodiment of the invention, the coffee machine comprises a steam lance and a steam line connected to said first hydraulic line or to a second boiler positioned along a third hydraulic line connected to said supply pump upstream of said first boiler.

The present invention relates to a method for extracting coffee with such a coffee machine, where the cold extraction of coffee is performed at a greater brewing rate than envisaged for cold extraction of espresso coffee through the switching of said distribution valve means to said second connection configuration.

The first boiler is activated for the preparation of hot espresso coffee.

The thermal stabiliser can also be activated for preparing hot espresso coffee and collaborating with the first boiler if placed upstream of said distribution valve means.

The thermal stabiliser is activated for preparing cold espresso coffee both in the case in which it is placed along said second line and in the case in which it is placed upstream of said distribution valve means.

Therefore, according to the invention the cold extraction aims to raise the brewing pressure inside the brewing chamber to compensate for the low extraction temperature.

The cold extraction can take place quickly, with comparable times to those required for preparing a traditional espresso coffee.

In this way there will be three effects:
a) the cold extract of coffee in the cup can maintain a body typical of hot espressos that normally have TDS (Total Dissolved Solids) between 4.5 and 6.5 and which, even if lower, with the same dose reaches TDS between 2.5 and 4, having decisively more body than other cold beverages such as Cold Brew which generally has TDS between 1.3 and 1.4;
b) the creaminess will be greater thanks to the natural nitrogen infusing which comes from the emulsion with air inside the filter holder which, especially in the event of using the pressurised filter with a single calibrated hole comprised between 0.2 and 0.5 mm, makes the cold coffee exit at high speed through the calibrated hole promoting extra foaming in the bottom of the filter holder before distribution into the cup;
c) the aromatic profile will be different as extraction comprised between 25 and 35°C limits the extraction of the bitter aromas typical of dark roasts and also the extraction of the too acidic aromas of very light roasts, thus guaranteeing a decisively sweeter extraction with respect to the equivalent hot extraction without altering the amount of coffee, roasting, dose or particle size.

It clearly appears that the desired result is obtained due to the fact that, as the second non-return valve is calibrated with a very low opening pressure, a significant part of the pressure dispensed by the supply pump is to be found inside the brewing chamber.

In synergy, the relevant espresso coffee filter helps to maintain the brewing pressure inside the brewing chamber thanks to its appropriately calibrated holes.

It must be underlined that the aforesaid hydraulic circuit can be implemented in an espresso coffee machine in which the cold extraction can be performed with a higher brewing pressure inside the brewing chamber than that envisaged for the hot extraction of espresso coffee. Therefore, according to the invention, a cold coffee extract is obtained which is visibly similar to an espresso coffee as it has a nice cream which, although lighter, is persistent and at the same time, without altering the amount of coffee used, returns sweeter and less bitter sensory tones with respect to a hot extraction of an espresso coffee.

The use of distribution valve means also enables the switching from hot extraction to cold extraction immediately without first having to cool the first boiler or hot parts of the hydraulic circuit associated therewith which could be warm because of the various thermal inertia values especially if the cold extraction immediately follows a hot extraction.

Further features and advantages of the invention will become more apparent from the description of a preferred, but not exclusive, embodiment of the coffee machine according to the invention, which is illustrated by way of approximate and non-limiting example in the attached drawings, of which:

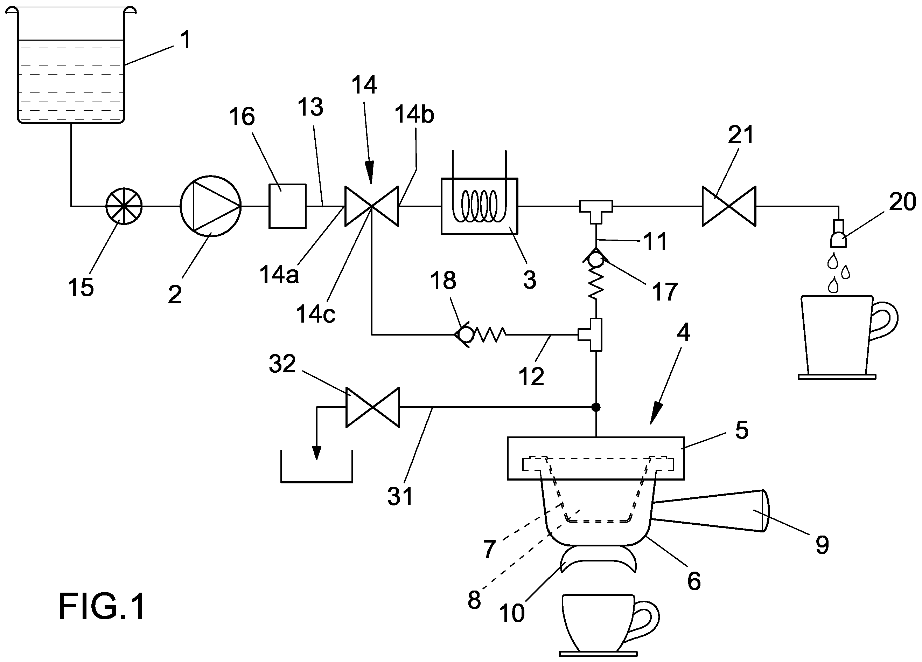

figure 1 schematically shows the hydraulic circuit of the machine in accordance with a first preferred embodiment;
figure 2 schematically shows the hydraulic circuit of the machine in accordance with a second preferred embodiment;
figure 3 schematically shows the hydraulic circuit of the machine in accordance with a third preferred embodiment;
figure 4a shows a first filter solution, illustrated in a sectional lateral raised view along a diameter;
figure 4b shows a plan view from below of the filter of figure 4a;
figure 5a shows a second filter solution, illustrated in a sectional lateral raised view along a diameter;
figure 5b shows a plan view from below of the filter of figure 5a.

In the following description equivalent parts of the various embodiments of the invention will be indicated with the same reference number.

With reference to the mentioned figures, the hydraulic circuit of the coffee machine is shown comprising a water tank 1 and/or a connection (not illustrated in the specific case) to a water supply, a water supply pump 2 connected in cascade to the water tank 1, a first water heating boiler 3 connected in cascade to the pump 1, a brewing unit 4 connected in cascade to the boiler 3 and comprising a hot water dispensing head 5.

The brewing unit 4 further comprises a filter holder 6 housing a filter 7 engageable with the dispensing head 5 for delimiting a brewing chamber 8.

The filter holder 6 has in a known way a hand grip 9 and one or more dispensing spouts 10, as well as relevant removable engagement means (not shown) with the dispensing head 5, for example, but not necessarily, outer perimeter wings of the filter holder 6 which can be coupled into corresponding seats (not shown) provided in the dispensing head 5.

The coupling of the wings into the corresponding seats can be carried out manually by a rotary or translational movement of the filter holder 6 with respect to the dispensing head 5.

The hydraulic circuit comprises a first hydraulic connection line 11 for connecting the first boiler 3 to the dispensing head 5 and a second by-pass line 12 of the first boiler 3 hydraulically connecting the pump 2 to the dispensing head 5, naturally as well as a hydraulic connection line 13 for connecting the pump 2 to the first boiler 3.

The hydraulic line 13 may have a flow meter 15 and a pressure damper 16 downstream of the supply pump 2.

The hydraulic circuit further comprises a distribution valve means 14 switchable between a first connection configuration of the supply pump 2 to the first line 11 and a second connection configuration of the supply pump 2 to the second line 12.

The distribution valve means 14 is for example formed by a three-way solenoid valve, where an inlet way 14a is supplied by the supply pump 2, a first outlet way 14b supplies the first boiler 3 and a second outlet way 14c supplies the second hydraulic line 12.

Advantageously, the first line 11 is provided with a first non-return valve 17 calibrated at a first opening pressure and the second line 12 is provided with a second non-return valve 18 calibrated at a second opening pressure lower than the first opening pressure.

Each non-return valve 17, 18 comprises a shutter constrained by a guide and pushed by a spring against a seat: if the water pressure is insufficient to overcome the elastic force of the spring, the valve remains closed but if the water pressure is sufficient to overcome the force of the spring, the valve opens. The opening pressure difference can therefore be obtained by using springs with different rigidity for the first and the second non-return valve 17 and 18.

The supply pump 2 is configured to dispense water at a dispensing pressure comprised between 4 bar and 25 bar.

The first non-return valve 17 is calibrated with a first opening pressure comprised between 3 bar and 8 bar.

The second non-return valve 18 is calibrated with a second opening pressure comprised between 0.05 bar and 3 bar.

In particular, it has been found to be convenient to use a first non-return valve 17 calibrated with a first opening pressure comprised between 4 bar and 6 bar and a second non-return valve 18 calibrated with a second opening pressure comprised between 0.1 bar and 2.5 bar.

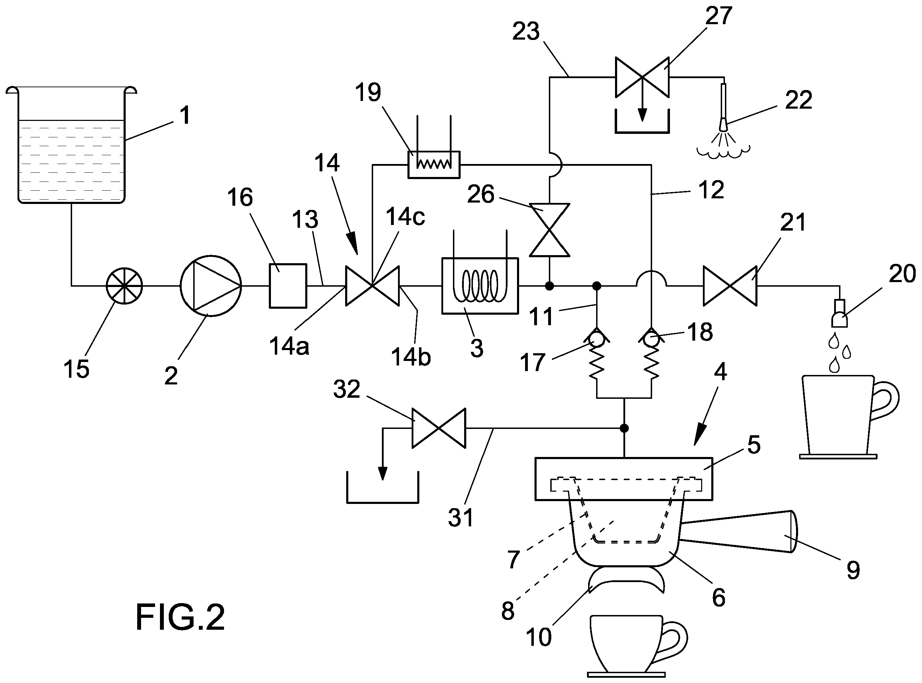

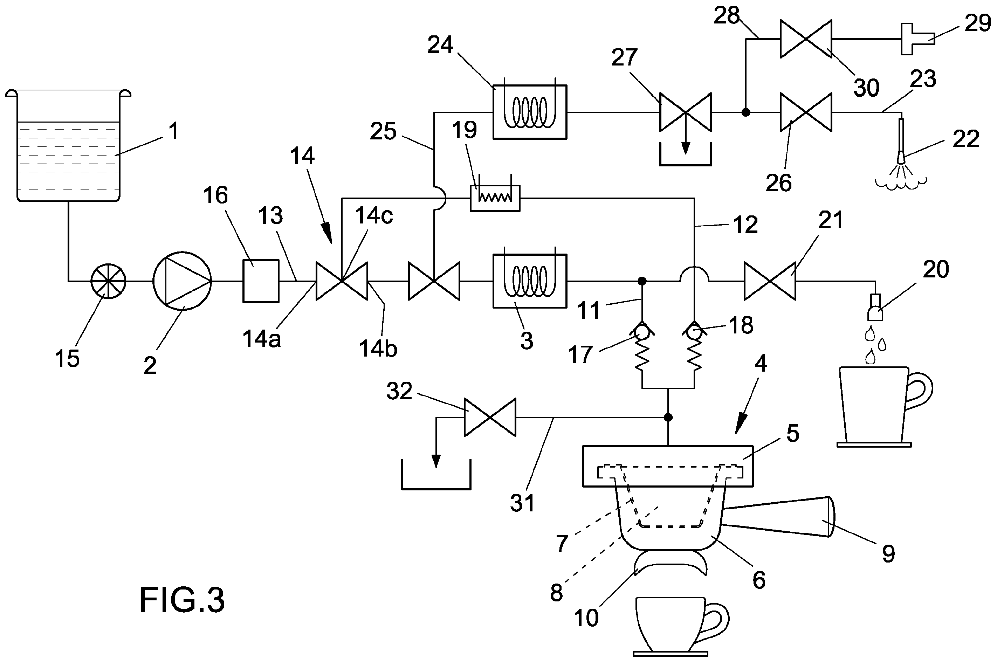

Advantageously, the hydraulic circuit along the second line 12 or alternatively upstream of said distribution valve means 14 can further have, as highlighted in the solutions illustrated in figures 2 and 3, a thermal stabiliser 19 of the water coming from the water tank 1 and/or from the connection to the water supply.

The thermal stabiliser 19, formed for example by a low power boiler, is configured to stabilise the temperature of the water coming from the water tanks 1 and/or from the connection to a water supply in a range comprised between 25°C and 35°C.

The filter holder 6 advantageously houses an espresso coffee filter 7.

The espresso coffee filter 7 is configured to maintain the pressure inside the brewing chamber 8 where the load of coffee powder is positioned.

The filter 7 comprises a tubular side wall 7a, a flange 7b which projects along the outer perimeter of the upper end of the side wall 7, and a bottom 7c, 7d, 7e.

The flange 7b in use is clamped between a support surface provided by the filter holder 6 and a hydraulic sealing gasket mounted in the dispensing head 5.

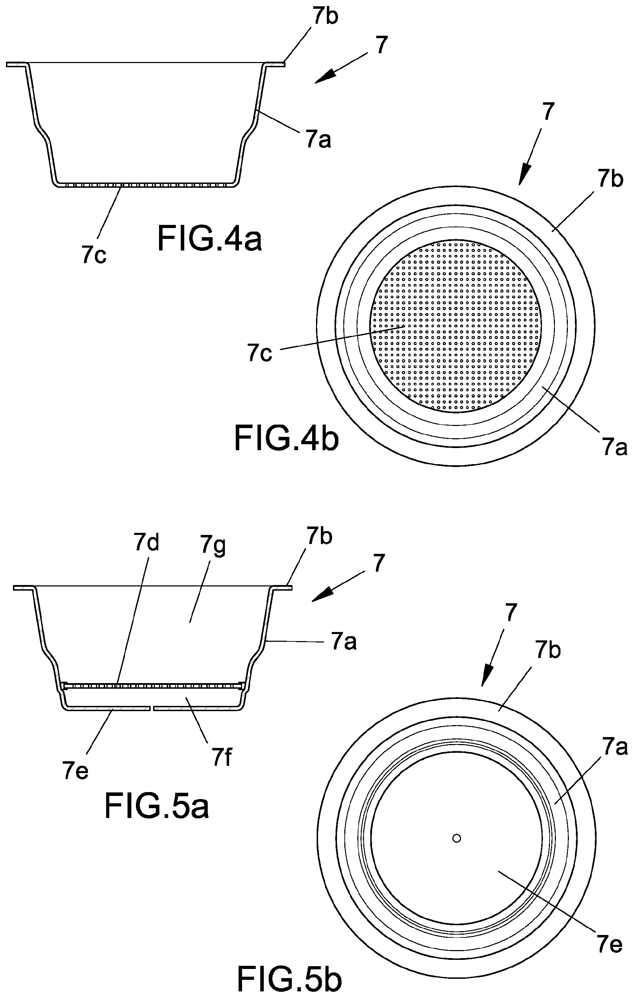

With reference to the solution illustrated in figures 4a and 4b, the filter 7 has a bottom 7c with a single wall provided with a plurality of uniformly distributed holes.

With reference to the solution illustrated in figures 5a and 5b, the filter 7 has a bottom having an inner wall 7d and an outer wall 7e delimiting with the inner wall 7d a second chamber 7f downstream of the chamber 7g where the load of coffee powder can be positioned.

The inner wall 7d of the bottom 7 has a plurality of uniformly distributed calibrated holes whereas the outer wall 7e has a single calibrated hole preferably centrally positioned.

The second chamber 7f also contributes to improving the emulsion of the coffee extract with air to give an even creamier effect to the coffee extract.

The hydraulic circuit of the coffee machine can comprise other components for adding other functions.

There may be a discharge line 31, provided with the relevant shut-off valve 32, in particular a solenoid valve, connected to the dispensing head 5, to the first line 11 downstream of the first non-return valve 17 and to the second line 12 downstream of the second non-return valve 18. There may be a hot water dispenser 20 connected by means of a shut-off valve 21, in particular a solenoid valve, to the first boiler 3.

There may be a steam lance 22 and a steam line 23 connected to the first hydraulic line 11, as shown in figure 2, or to a second boiler 24 positioned along a third hydraulic line 25 connected to the supply pump 2 upstream of the first boiler 3, as shown in figure 3.

The steam line 23, if provided, has a shut-off valve 26, in particular a solenoid valve, and can have a discharge valve 27, in particular again a solenoid valve.

With reference to the solution illustrated in figure 3, a derivation 28 of the steam line 23 may be provided, connected to a steam dispenser 29 for heating and emulsifying milk contained in a jug not shown.

The derivation 28 of the steam line 23, if provided, is provided with a shut-off valve 30, in particular a solenoid valve.

The operation of the coffee machine is briefly as follows.

When a traditional espresso coffee extracted hot with a load of coffee powder contained in the filter 7 is to be prepared, the corresponding command is selected at an interface of the coffee machine with the user, and the electronic controller of the coffee machine switches the distribution valve means 14 into the first configuration, activates the first boiler 3 and the supply pump 2. The thermal stabiliser 19, if placed upstream of the distribution valve means 14, can be activated to collaborate with the heating provided by the first boiler 3.

When, instead, a cold extraction is to be performed with a load of coffee powder contained in the filter 7, the corresponding command is selected at the interface of the coffee machine with the user, and the electronic controller of the coffee machine switches the distribution valve means 14 into the second configuration, activates the thermal stabiliser 19 and the supply pump 2.

Given that the brewing pressure inside the brewing chamber 7g is determined by the type of coffee, particle size, dose, pressing of the powder in the filter and opening section of the holes positioned on the bottom of the filters, the working pressure P1 of the pump is not very high considering the modest opening pressure at which the second non-return valve 18 is calibrated. Therefore, with respect to the hot espresso where instead the working pressure P2 of the pump **is** higher considering the modest opening pressure at which the non-return valve 17 is calibrated with all the other conditions unchanged, the result will always be P1 < P2.

Considering the characteristic curve of the pump (particularly in the case in question the vibration pump) which envisages higher water flow rates as the working pressure of the pump decreases, it follows that with the described circuit, in the cold extraction the water flow rate Q1 will be higher than the hot one Q2, i.e. Q1 > Q2.

This result provides a higher flow rate of coffee through the filter and the extracted coffee, bouncing on the bottom of the filter holder, will be able to incorporate air, increasing the creaminess of the beverage thus creating a natural "nitrogen infusing" effect, in a similar way to beverages in which nitrogen is actively added which in the coffee world is known as "nitro coffee".

The thermal stabiliser 19 guarantees that in the brewing chamber 8 the brewing temperature is stable and independent from the water temperature at the inlet from the tank 1 or from the water supply.

The cold extraction can take place in an ideal programmed temperature range preferably comprised between 25°C and 35°C so as to improve the cold extraction in terms of body and balance of the aromatic profile.

The cold extraction is further improved by the espresso coffee filter 7 configured especially to contain a dose of ground coffee with a particle size comparable with that of traditional espresso coffee extracted hot.

With the filter illustrated in figure 4a and 4b it is preferable to use a coffee with finer grind to have a similar effect in terms of cream.

This filter 7 has calibrated holes to prevent the immediate venting of the pressure inside the brewing chamber 8 keeping it at suitable values preferably comprised in a range between 6 bar and 15 bar before letting the coffee extract out.

The user can thus consume a cold pure coffee extract at a temperature comprised between 25 and 35°C or cool it by adding ice to the cup or cubes of a material suitable for cooling it without water being added to the coffee extraction, according to personal tastes with respect to the aromatic profile guaranteed by the extraction at high pressure associated with an extraction temperature stably comprised between 25 and 35°C.

The coffee machine as conceived herein is susceptible to many modifications and variations, all falling within the scope of the inventive concept as defined by the appended claims.

In practice, the materials used, as well as the dimensions, can be any according to the needs and the state of the art.

## Claims

1. A coffee machine comprising a water supply pump (2), a first water heating boiler (3), a brewing unit (4) comprising a hot water dispensing head (5), a first hydraulic connection line (11) for connecting said first boiler (3) to said dispensing head (5), a second by-pass line (12) of the first boiler (3), hydraulically connecting said pump (2) to said dispensing head (5), distribution valve means (14) switchable between a first connection configuration of said supply pump (2) to said first line (11) and a second connection configuration of said supply pump (2) to said second line (12), **characterised in that** said first line (11) is provided with a first non-return valve (17) calibrated at a first opening pressure and said second line (12) is provided with a second non-return valve (18) calibrated at a second opening pressure lower than said first opening pressure.

2. The coffee machine according to claim 1, **characterised in that** said brewing unit (4) comprises a filter holder (6) housing a filter (7) engageable with said dispensing head (5) for delimiting a brewing chamber (8).

3. The coffee machine according to any preceding claim, **characterised in that** said supply pump (2) is configured to dispense water at a dispensing pressure comprised between 4 bar and 25 bar, said first non-return valve (17) is calibrated with a first opening pressure comprised between 3 bar and 8 bar and said second non-return valve (18) is calibrated with a second opening pressure comprised between 0.05 bar and 3 bar.

4. The coffee machine according to the preceding claim, **characterised in that** said first non-return valve (17) is calibrated with a first opening pressure comprised between 4 bar and 6 bar and said second non-return valve (18) is calibrated with a second opening pressure comprised between 0.1 bar and 2.5 bar.

5. The coffee machine according to any preceding claim, comprising a water tank (1) and/or a connection to a water supply, **characterised in that** along said second line (12) or upstream of said distribution valve means (14) there is a thermal stabiliser (19) of the water coming from said water tank (1) and/or from said connection to a water supply.

6. The coffee machine according to the preceding claim, **characterised in that** said thermal stabiliser (19) is configured to stabilise the temperature of the water coming from said water tank (1) and/or from said connection to a water supply in a range comprised between 25°C and 35°C.

7. The coffee machine according to any one of claims 2 or 3 - 6 when dependent on claim 2, **characterised in that** said filter holder (6) houses an espresso coffee filter (7).

8. The coffee machine according to the preceding claim, **characterised in that** said espresso coffee filter (7) is configured with holes calibrated to maintain a brewing pressure comprised between 6 bar and 15 bar inside said brewing chamber (8).

9. The coffee machine according to any preceding claim, **characterised in that** said distribution valve means (14) comprises a three-way solenoid valve (14a, 14b, 14c).

10. The coffee machine according to any preceding claim, **characterised in that** it comprises a steam lance (22) and a steam line (23) connected to said first hydraulic line (11) or to a second boiler (24) positioned along a third hydraulic line (25) connected to said supply pump (2) upstream of said first boiler (3).

11. A method for extracting coffee with a coffee machine according to any preceding claim, where the cold extraction is performed at a greater brewing rate than envisaged for cold extraction of espresso coffee through the switching of said distribution valve means (14) to said second connection configuration.

12. The method for extracting coffee according to the preceding claim, **characterised in that** said first boiler (3) is activated for the hot extraction of espresso coffee, and said thermal stabiliser (19) is activated for the cold extraction of coffee.

13. The method for extracting coffee according to the preceding claim, **characterised in that** said thermal stabiliser (19) is also activated for hot coffee extraction if it is placed upstream of said distribution valve means (14).

## Patentansprüche

1. Kaffeemaschine, umfassend eine Wasserförderpumpe (2), einen ersten Wassererhitzerkessel (3), eine Brühgruppe (4), die einen Heißwasserausgabekopf (5) umfasst, eine erste hydraulische Verbindungsleitung (11) zum Anschluss des ersten Kessels (3) an den Ausgabekopf (5), eine zweite Bypassleitung (12) des ersten Kessels (3), die hydraulisch die Pumpe (2) mit dem Ausgabekopf (5) verbindet, sowie ein Verteilventil (14), das zwischen einer ersten Anschlusskonfiguration der Förderpumpe (2) an die erste Leitung (11) und einer zweiten Anschlusskonfiguration der Förderpumpe (2) an die zweite Leitung (12) umschaltbar ist, **dadurch gekennzeichnet, dass** die erste Leitung (11) mit einem ersten Rückschlagventil (17) versehen ist, das auf einen ersten Öffnungsdruck kalibriert ist, und die zweite Leitung (12) mit einem zweiten Rückschlagventil (18) versehen ist, das auf einen zweiten Öffnungsdruck kalibriert ist, der niedriger ist als der erste Öffnungsdruck.

2. Kaffeemaschine nach Anspruch 1, **dadurch gekennzeichnet, dass** die Brühgruppe (4) einen Siebträger (6) umfasst, der einen Filter (7) aufnimmt, der mit dem Ausgabekopf (5) verbindbar ist, um eine Brühkammer (8) zu bilden.

3. Kaffeemaschine nach einem der vorhergehenden Ansprüche, **dadurch gekennzeichnet, dass** die Förderpumpe (2) so ausgelegt ist, dass sie Wasser mit einem Druck zwischen 4 bar und 25 bar abgibt, dass das erste Rückschlagventil (17) auf einen Öffnungsdruck zwischen 3 bar und 8 bar kalibriert ist, und dass das zweite Rückschlagventil (18) auf einen Öffnungsdruck zwischen 0,05 bar und 3 bar kalibriert ist.

4. Kaffeemaschine nach dem vorhergehenden Anspruch, **dadurch gekennzeichnet, dass** das erste Rückschlagventil (17) auf einen Öffnungsdruck zwischen 4 bar und 6 bar kalibriert ist und das zweite Rückschlagventil (18) auf einen Öffnungsdruck zwischen 0,1 bar und 2,5 bar.

5. Kaffeemaschine nach einem der vorhergehenden Ansprüche, umfassend einen Wassertank (1) und/oder einen Anschluss an eine Wasserleitung, **dadurch gekennzeichnet, dass** entlang der zweiten Leitung (12) oder stromaufwärts des Verteilventils (14) ein Thermostabilisator (19) für das Wasser aus dem Wassertank (1) und/oder aus dem Wasseranschluss vorgesehen ist.

6. Kaffeemaschine nach dem vorhergehenden Anspruch, **dadurch gekennzeichnet, dass** der Thermostabilisator (19) so ausgelegt ist, dass er die Temperatur des Wassers aus dem Wassertank (1) und/oder dem Wasseranschluss in einem Bereich zwischen 25 °C und 35 °C stabilisiert.

7. Kaffeemaschine nach einem der Ansprüche 2 oder 3 bis 6, soweit abhängig von Anspruch 2, **dadurch gekennzeichnet, dass** der Siebträger (6) einen Espressokaffeefilter (7) aufnimmt.

8. Kaffeemaschine nach dem vorhergehenden Anspruch, **dadurch gekennzeichnet, dass** der Espressokaffeefilter (7) mit Öffnungen versehen ist, die so kalibriert sind, dass in der Brühkammer (8) ein Brühdruck zwischen 6 bar und 15 bar aufrechterhalten wird.

9. Kaffeemaschine nach einem der vorhergehenden Ansprüche, **dadurch gekennzeichnet, dass** das Verteilventil (14) ein Drei-Wege-Magnetventil (14a, 14b, 14c) umfasst.

10. Kaffeemaschine nach einem der vorhergehenden Ansprüche, **dadurch gekennzeichnet, dass** sie eine Dampflanze (22) und eine Dampfleitung (23) umfasst, die mit der ersten hydraulischen Leitung (11) oder mit einem zweiten Kessel (24) verbunden ist, der entlang einer dritten hydraulischen Leitung (25) angeordnet ist, die stromaufwärts des ersten Kessels (3) mit der Förderpumpe (2) verbunden ist.

11. Verfahren zur Kaffeeextraktion mit einer Kaffeemaschine gemäß einem der vorhergehenden Ansprüche, wobei die Kaltextraktion mit einer höheren Brühgeschwindigkeit als für die Kaltextraktion von Espresso vorgesehen erfolgt, durch Umschalten des Verteilventils (14) in die zweite Anschlusskonfiguration.

12. Verfahren zur Kaffeeextraktion nach dem vorhergehenden Anspruch, **dadurch gekennzeichnet, dass** der erste Kessel (3) für die Heißextraktion von Espresso aktiviert wird und der Thermostabilisator (19) für die Kaltextraktion aktiviert wird.

13. Verfahren zur Kaffeeextraktion nach dem vorhergehenden Anspruch, **dadurch gekennzeichnet, dass** der Thermostabilisator (19) auch für die Heißextraktion aktiviert wird, wenn er stromaufwärts des Verteilventils (14) angeordnet ist.

## Revendications

1. Machine à café comprenant une pompe d'alimentation en eau (2), une première chaudière de chauffage de l'eau (3), une unité d'infusion (4) comprenant une tête de distribution d'eau chaude (5), une première conduite hydraulique de connexion (11) pour relier ladite première chaudière (3) à ladite tête de distribution (5), une seconde conduite de dérivation (12) de la première chaudière (3) reliant hydrauliquement ladite pompe (2) à ladite tête de distribution (5), et un moyen de vanne de distribution (14) commutable entre une première configuration de connexion de ladite pompe (2) à ladite première conduite (11) et une seconde configuration de connexion de ladite pompe (2) à ladite seconde conduite (12), **caractérisée en ce que** ladite première conduite (11) est équipée d'un premier clapet anti-retour (17) calibré à une première pression d'ouverture et ladite seconde conduite (12) est équipée d'un second clapet anti-retour (18) calibré à une seconde pression d'ouverture inférieure à ladite première pression d'ouverture.

2. Machine à café selon la revendication 1, **caractérisée en ce que** ladite unité d'infusion (4) comprend un porte-filtre (6) recevant un filtre (7) apte à coopérer avec ladite tête de distribution (5) pour délimiter une chambre d'infusion (8).

3. Machine à café selon l'une quelconque des revendications précédentes, **caractérisée en ce que** ladite pompe d'alimentation (2) est configurée pour distribuer de l'eau à une pression comprise entre 4 bars et 25 bars, ledit premier clapet anti-retour (17) étant calibré à une première pression d'ouverture comprise entre 3 bars et 8 bars, et ledit second clapet anti-retour (18) étant calibré à une seconde pression d'ouverture comprise entre 0,05 bar et 3 bars.

4. Machine à café selon la revendication précédente, **caractérisée en ce que** ledit premier clapet anti-retour (17) est calibré à une première pression d'ouverture comprise entre 4 bars et 6 bars et ledit second clapet anti-retour (18) est calibré à une seconde pression d'ouverture comprise entre 0,1 bar et 2,5 bars.

5. Machine à café selon l'une quelconque des revendications précédentes, comprenant un réservoir d'eau (1) et/ou un raccordement à une alimentation en eau, **caractérisée en ce qu'**un stabilisateur thermique (19) de l'eau provenant dudit réservoir d'eau (1) et/ou dudit raccordement à une alimentation en eau est disposé le long de ladite seconde conduite (12) ou en amont dudit moyen de vanne de distribution (14).

6. Machine à café selon la revendication précédente, **caractérisée en ce que** ledit stabilisateur thermique (19) est configuré pour stabiliser la température de l'eau provenant dudit réservoir (1) et/ou du raccordement à une alimentation en eau dans une plage comprise entre 25 °C et 35 °C.

7. Machine à café selon l'une quelconque des revendications 2 ou 3 à 6 dépendant de la revendication 2, **caractérisée en ce que** ledit porte-filtre (6) contient un filtre pour café expresso (7).

8. Machine à café selon la revendication précédente, **caractérisée en ce que** ledit filtre pour café expresso (7) est pourvu d'orifices calibrés pour maintenir une pression d'infusion comprise entre 6 bars et 15 bars dans ladite chambre d'infusion (8).

9. Machine à café selon l'une quelconque des revendications précédentes, **caractérisée en ce que** ledit moyen de vanne de distribution (14) comprend une électrovanne à trois voies (14a, 14b, 14c).

10. Machine à café selon l'une quelconque des revendications précédentes, **caractérisée en ce qu'**elle comprend une lance vapeur (22) et une conduite de vapeur (23) connectée à ladite première conduite hydraulique (11) ou à une seconde chaudière (24) disposée le long d'une troisième conduite hydraulique (25) connectée à ladite pompe d'alimentation (2) en amont de ladite première chaudière (3).

11. Procédé d'extraction de café avec une machine à café selon l'une quelconque des revendications précédentes, dans lequel l'extraction à froid est effectuée à un débit d'infusion supérieur à celui prévu pour l'extraction à froid de café expresso, par le basculement dudit moyen de vanne de distribution (14) vers ladite seconde configuration de connexion.

12. Procédé d'extraction de café selon la revendication précédente, **caractérisé en ce que** ladite première chaudière (3) est activée pour l'extraction à chaud de café expresso et ledit stabilisateur thermique (19) est activé pour l'extraction à froid de café.

13. Procédé d'extraction de café selon la revendication précédente, **caractérisé en ce que** ledit stabilisateur thermique (19) est également activé pour l'extraction de café chaud lorsqu'il est disposé en amont dudit moyen de vanne de distribution (14).
